# EUROPÄISCHE PATENTSCHRIFT

(11) **EP 0 906 002 B1**
(45) Veröffentlichungstag und Bekanntmachung des Hinweises auf die Patenterteilung: **26.05.2004**
(21) Anmeldenummer: 98117479.0
(22) Anmeldetag: 15.09.1998
(51) Int. Cl.: H05B 37/02

(54) **Leuchte**
Lighting device
Luminaire

(30) Priorität: 29.09.1997 DE 19743047
(43) Veröffentlichungstag der Anmeldung: 31.03.1999
(73) Patentinhaber: Zumtobel Staff GmbH & Co. KG, 32657 Lemgo (DE)
(72) Erfinder: Daschkey, Karl-Heinz, 32657 Lemgo (DE)
(74) Vertreter: Schmidt-Evers, Jürgen, Dipl.-Ing.

(56) Entgegenhaltungen:
- EP-A- 0 525 654
- EP-A- 0 773 708
- DE-A- 3 105 834
- DE-A- 4 312 614
- DE-U- 29 603 218
- DE-U- 29 719 988

## Beschreibung

Die vorliegende Erfindung betrifft eine Leuchte nach dem Oberbegriff des Anspruches 1. Insbesondere betrifft die vorliegende Erfindung eine derartige, als Strahler ausgebildete Leuchte, die an eine Stromschiene eines Beleuchtungssystems anzuschließen ist.

Es sind bereits Beleuchtungssysteme bekannt, bei denen auf einer oder mehreren Stromschienen Strahler montiert sind, wobei jede Stromschiene an eine Versorgungseinheit angeschlossen ist, die wiederum über einen konventionellen Zweidrahtbus von einem zentralen Licht-Management-System (LMS) angesteuert wird. Das Licht-Management-System enthält beispielsweise eine Bedienoberfläche in Form zahlreicher Tasten zur Einstellung bestimmter Funktionen der an die einzelnen Stromschienen angeschlossenen Strahler. Alternativ können dem Licht-Management-System bestimmte Steuerbefehle mittels einer Infrarot-Fembedienung mitgeteilt werden. Diese von einem Benutzer dem Licht-Management-System mitgeteilten Steuerbefehle für die einzelnen Strahler werden von dem Licht-Management-System aufbereitet und über die Busleitung der entsprechenden Versorgungseinheit mitgeteilt, wobei die Versorgungseinheit den aufbereiteten Befehlen entsprechende Steuerinformationen auf die Versorgungsspannung der einzelnen Stromschienen aufmoduliert. Die Sinusschwingung der Versorgungsspannung dient demnach als Medium zur Übertragung der Steuerinformationen an die einzelnen Strahler. Die Verwendung der Versorgungsspannung zur Übertragung von Steuerinformationen wird auch als "power line carrier" (PLC) bezeichnet. Die einzelnen an die Stromschienen angeschlossenen Strahler besitzen eine Decodierelektronik, die die mittels der Versorgungsspannung der Stromschiene übertragenen Steuerinformationen demoduliert und decodiert, so daß der jeweils gewünschte Strahler entsprechend des jeweiligen Steuerbefehls angesteuert und beispielsweise gedimmt werden kann. Auf diese Weise können pro Stromschiene und Phase mehrere Strahler individuell angesteuert werden, obwohl sie lediglich über eine gemeinsame Stromschiene und eine einzige, gemeinsame Versorgungseinheit betrieben werden.

Aus der vorhergehenden Beschreibung wird offensichtlich, daß die in dem oben beschriebenen Beleuchtungssystem verwendeten Strahler eigene bzw. spezielle Decodier- und Steuereinrichtungen benötigen, um die über die Sinusschwingung der Versorgungsspannung übertragenen Steuersignale in entsprechende Betriebsaktionen, z. B. Dimmen, Ein-/Ausschalten usw., umsetzen zu können. Daher werden gegenwärtig auf dem Markt entsprechende Strahler mit fest integrierten Decodier- und Steuereinrichtungen angeboten. Ein Kunde muß sich demnach beim Kauf einer Leuchte entscheiden, welche Betriebsfunktionen der Leuchte er wünscht. Eine nachträgliche Anpassung der Funktionen an den jeweiligen Bedarf bzw. Anwendungsfall ist nicht möglich.

Aus der DE-C2-31 05 834 ist eine besondere Ausgestaltung eines Dimmers, d.h. eines Lichtreglers, bekannt, die ohne Änderung des voll funktionsfähigen elektrischen Reglerteils im Baukastenprinzip eine funktionelle Erweiterung der Dimmerfunktionen ermöglicht. Gemäß der DE-C2-31 05 834 wird vorgeschlagen, an dem Dimmergehäuse einen elektrischen Kontaktträger vorzusehen, auf den eine funktionserweitemde Ergänzungsbaugruppe aufgesteckt werden kann. So kann beispielsweise der Dimmer als Basisfunktionen lediglich das gewöhnliche Ein- und Ausschalten des Lichts sowie das Dimmen der Helligkeit umfassen. Durch Aufstecken der Ergänzungsbaugruppe können diese Basisfunktionen des Dimmers verändert oder erweitert werden, wobei beispielsweise als erweiternde Baugruppe ein "Timer" infrage kommt, der neben den zuvor beschriebenen Grundfunktionen ein Überwachen der Einschaltzeit der von dem Dimmer angesteuerten Lichtquelle ermöglicht.

Auch aus der DE 43 12 614 A1 ist es bekannt, eine Bedieneinheit für Installationsgeräte mit Hilfe eines variabel aufzusteckenden Ergänzungsmoduls an unterschiedliche Verwendungszwecke anzupassen. Beispielsweise kann für einen Dimmer ein Ergänzungsmodul verwendet werden, welches neben einer manuellen Eingabe der gewünschten Helligkeit auch die Möglichkeit eröffnet, den Dimmer mittels IR-Signalen fernzusteuern. Hierdurch können zwar die Eingabemöglichkeiten für die Bedieneinheit verändert werden, die eigentliche Funktion der Bedieneinheit und letztendlich des daran angeschlossenen Verbrauchers bleibt allerdings unverändert.

Der vorliegenden Erfindung liegt nunmehr die Aufgabe zugrunde, eine Leuchte nach dem Oberbegriff des Anspruches 1 derart auszugestalten, daß die Funktionen der Leuchte auf einfache Art und Weise verändert bzw. erweitert werden können.

Insbesondere soll die Leuchte in Form eines Strahlers in einem zuvor beschriebenen PLC-Beleuchtungssystem einsetzbar sein, wobei die Steuersignale für den Strahler über die Versorgungsspannung des Strahlers, insbesondere über die Stromschiene übertragen werden.

Erfindungsgemäß wird diese Aufgabe durch eine Leuchte mit den Merkmalen des Anspruches 1 gelöst.

Die Unteransprüche beschreiben vorteilhafte und bevorzugte Ausgestaltungen der vorliegenden Erfindung.

In Kombination mit der erfindungsgemäßen Leuchte wird ein Ergänzungsmodul nach Anspruch 15 vorgeschlagen, welcher mit einer erfindungsgemäßen Leuchte koppelbar ist.

Gemäß Anspruch 16 wird eine bevorzugte Verwendung der erfindungsgemäßen Leuchte in einem PLC-Beleuchtungssystem vorgeschlagen. Gemäß der vorliegenden Erfindung weist die Leuchte Schnittstellenmittel auf, mit denen ein Ergänzungsmodul koppelbar ist, wobei der entsprechende Ergänzungsmodul mindestens eine Ergänzungsfunktion besitzt, durch die im gekoppelten Zustand der Basisfunktionsumfang der Leuchte verändert, insbesondere erweitert wird.

Auf diese Weise ist es möglich, daß der Leuchte durch beispielsweise Aufstecken eines Ergänzungsmoduls zusätzliche Betriebsfunktionen hinzugefügt werden, die den ursprünglichen Basisfunktionsumfang der Leuchte erweitern. Ebenso ist es jedoch auch möglich, daß der mit der Leuchte gekoppelte Ergänzungsmodul die ursprünglich vorgesehenen Basisfunktionen der Leuchte näher spezifiziert, so daß durch Koppeln des Ergänzungsmoduls mit der Leuchte beispielsweise bestimmte Parameter der Leuchte, wie z. B. der Helligkeitsgrad oder dergleichen, eingestellt werden.

Die Kopplung des Ergänzungsmoduls mit der Leuchte erfolgt insbesondere über eine als elektrische Anschlußeinheit ausgebildete Schnittstelle, wobei die Kontaktelemente, z.B. Kontaktstifte, des Ergänzungsmoduls in die entsprechend ausgebildete elektrische Anschlußeinheit eingeführt oder eingesteckt werden.

Im Grundzustand der Leuchte kann die Schnittstelle von einer abnehmbaren Abdeckplatte bedeckt sein, die in diesem Zustand die Schnittstelle überbrückt und dabei keinen Einfluß auf die Basisfunktion(en) der Leuchte hat. Zu jedem beliebigen Zeitpunkt kann die Abdeckplatte entfernt werden und ein funktionserweiternder bzw. funktionsändemder Ergänzungsmodul über die Schnittstelle mit der Leuchte gekoppelt werden. Anstelle einer Abdeckplatte mit einer die Schnittstelle überbrückenden Kontaktbahn kann auch vorgesehen sein, daß bei Aufstecken der Abdeckplatte auf die Leuchte ein Mikroschalter betätigt wird, der die Schnittstelle überbrückt, wobei bei Abnehmen der Abdeckplatte wiederum der Schalter geöffnet und somit die Schnittstelle "aktiviert" wird. Vorteilhafterweise kann die Schnittstelle derart ausgestaltet sein, daß die Leuchte nicht einsatzbereit ist, falls weder eine Abdeckplatte noch ein Ergänzungsmodul mit der Leuchte gekoppelt ist.

Die erfindungsgemäße Leuchte kann in Beleuchtungssystemen, deren Steuerinformationen mittels PLC übertragen werden, eingesetzt werden. Es ist jedoch auch eine Anwendung der erfindungsgemäßen Leuchte in Beleuchtungsanlagen möglich, die nicht mittels eines Bussystems gesteuert werden. Allgemein ist die vorliegende Erfindung nicht auf den Einsatz in PLC-Beleuchtungssystemen beschränkt, sondern kann prinzipiell auf jeder Leuchte (d.h. auch auf einzelne Leuchten) angewendet werden, deren Basisfunktionen von einem Benutzer individuell erweitert oder verändert werden können sollen.

In PLC-Beleuchtungssystemen ist beispielsweise als Erweiterungsfunktion eines Ergänzungssmoduls die Verwendung bestimmter Decodier- und/oder Steuerelektroniken denkbar:

Ebenso kann der Ergänzungsmodul auch eine Bauteilgruppe aufweisen, die eine Infrarot-Fernsteuerung der Leuchte ermöglicht. Zudem ist beispielsweise der Einsatz von Dimm-, Timer-, Bewegungsmelder-, Rauchmelder- oder Sprach-Ergänzungsmodulen denkbar.

Die erfindungsgemäße Leuchte kann im Prinzip beliebig ausgestaltet sein, d.h. sie kann sowohl durch beispielsweise einen Strahler oder eine Langfeldleuchte gebildet sein. Bei Langfeldeuchten ist der Einsatz der erfindungsgemäß vorgeschlagenen Schnittstelle insbesondere in Lichtbändern und bei Lichtrohrsystemen von Vorteil, d.h. allgemein bei Anwendungen, in denen mehrere einzelne Leuchten im Verbund miteinander betrieben werden.

Ist die Leuchte als ein an einer Stromschiene zu befestigender Strahler ausgebildet, ist die Schnittstelle bevorzugt im Bereich des Kupplungsteils bzw. Adapters des Strahlers (d.h. des elektromechanischer Stromabnehmer des Strahlers) mit der Stromschiene vorgesehen, da dieses Kupplungsteil bei allen Strahlern identisch ausgestaltet ist und somit bei der zusätzlichen Schnittstelle lediglich dieses Kupplungsteil etwas vergrößert werden muß. Alternativ kann die Schnittstelle auch im Gehäuse von Betriebsgeräten der Leuchte oder im Leuchtengehäuse angeordnet sein. Ebenso kann das Kupplungsteil unverändert bleiben und die zusätzliche Schnittstelle als Baugruppe in das Kupplungsteil oder im Bereich des Kupplungsteils angefügt werden.

Die erfindungsgemäße Leuchte ermöglicht es, daß jeder Kunde bei Bedarf einfach durch werkzeugloses Hinzufügen eines Ergänzungsmoduls die Funktion(en) der Leuchte verändern oder erweitern kann. Da vorteilhafterweise die Kopplung des Moduls mit der Schnittstelle der Leuchte über eine mehrpolige Steckverbindung oder Steckvorrichtung erfolgt, genügt ein einfaches Anstecken des Ergänzungsmoduls, so daß die Kopplung des Ergänzungsmoduls mit der Leuchte jederzeit auch von einem Laien bewerkstelligt werden kann. Des weiteren ermöglicht es die vorliegende Erfindung, daß sich ein Anbieter auf wenige Basismodelle mit einem bestimmten Umfang an Basisfunktionen beschränken kann, so daß jeder Kunde einen erweiterten Funktionsumfang anwendungsspezifisch durch Aufstecken eines entsprechenden Ergänzungsmoduls herbeiführen kann.

Die Erfindung wird nachfolgend unter Bezugnahme auf die Zeichnung anhand bevorzugter Ausführungsbeispiele näher beschrieben.
Fig. 1 zeigt den allgemeinen Aufbau einer erfindungsgemäßen Leuchte, die als ein an eine Stromschiene angeschlossener Strahler ausgebildet ist,
Fig. 2 zeigt eine Darstellung zur Erläuterung der Verwendung der erfindungsgemäßen Leuchte in einem PLC-Beleuchtungssystem, und
Fig. 3 zeigt eine Darstellung zur Erläuterung der Verwendung der erfindungsgemäßen Leuchte in einem Beleuchtungssystem, wobei die einzelnen Leuchten des Beleuchtungssystems nicht über ein Bussystem angesteuert, jedoch im Verbund miteinander betrieben werden.

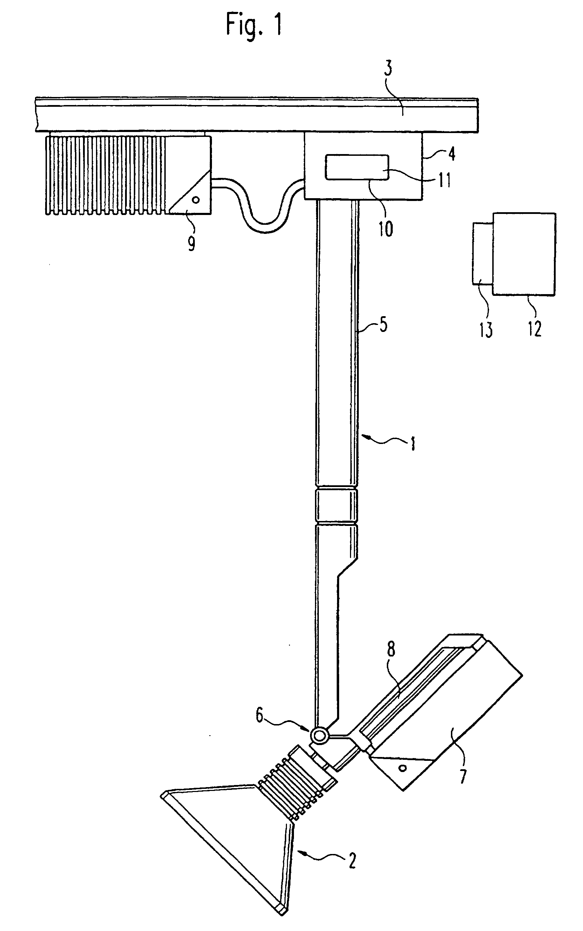

Fig. 1 zeigt beispielhaft den allgemeinen Aufbau einer erfindungsgemäßen Leuchte, die im dargestellten Beispiel als ein an einer Stromschiene befestigter Strahler ausgestaltet ist. Der in Fig. 1 dargestellte Strahler 1 besteht im wesentlichen aus einem Leuchtengehäuse 2, in dem beispielsweise eine Glühlampe als Lichtquelle angeordnet ist, einem Trägerteil 5 und einem Kupplungsteil 4, über das der Strahler 1 an einer Stromschiene 3 angeschlossen ist. An die Stromschiene 3 können weitere der in Fig. 1 dargestellten Strahler 1 angeschlossen sein, und über die Stromschiene 3 können - wie bereits eingangs beschrieben worden ist - Steuerinformationen von einem zentralen Licht-Management-System über die Versorgungsspannung der Stromschiene 3 an die einzelnen Strahler 1 übertragen werden. Das Leuchtengehäuse 2 ist über ein Schwenkgelenk 6 schwenkbar an dem Trägerteil 5 angebracht, wobei mit dem Leuchtengehäuse 2 ein Schwenkteil 8 verbunden ist, an dem insbesondere ein Netzgerät oder elektronischer Transformator 7 zum Betreiben der in dem Leuchtengehäuse vorhandenen Glühlampe angeordnet sein kann. Des weiteren kann ein elektronisches Vorschaltgerät 9 mit der Lichtquelle des in Fig. 1 dargestellten Strahlers 1 gekoppelt sein, um die Lichtquelle zu zünden und/oder die Helligkeit des abgegebenen Kunstlichtes zu dimmen. Der Aufbau des in Fig. 1 dargestellten Strahlers ist bereits im wesentlichen aus der EP-B1-0 398 369 bekannt.

Zusätzlich zu diesem bekannten Aufbau besitzt jedoch der in Fig. 1 gezeigte Strahler im Bereich des Kupplungsteils 4 zur Stromschiene 3 eine Schnittstelle 10, mit der ein Ergänzungsmodul 12 koppelbar ist. Im Normalzustand, d.h. in dem Zustand, in dem der Strahler 1 ausgeliefert wird, ist die Schnittstelle 10 durch eine Abdeckplatte 11 abgedeckt. In diesem Zustand ist die Schnittstelle 10 überbrückt und somit deaktiviert. Zum Aufstecken des in Fig. 1 gezeigten Ergänzungsmoduls 12 ist die Abdeckplatte 11 von dem Kupplungsteil 4 abzunehmen, so daß das entsprechend zu der Schnittstelle 10 ausgebildete Anschlußteil 13 des Ergänzungsmoduls 12, welches beispielsweise durch Kontaktstifte oder Kontaktleiterbahnen gebildet sein kann, auf die Schnittstelle 10 des Kupplungsteiles 4 aufgesteckt werden kann. Vorteilhafterweise wird im aufgesteckten Zustand der Ergänzungsmodul 12 bzw. die auf dem Ergänzungsmodul 12 befindlichen Ergänzungsbaugruppen über die Schnittstelle 10 und das Kupplungsteil 4 sowie die Stromschiene 3 mit Strom versorgt.

Bei dem in Fig. 1 gezeigten Beispiel befindet sich die Schnittstelle 10 im Kupplungsteil 4 des Strahlers 1. Alternativ kann die Schnittstelle 10 jedoch auch im Bereich des elektronischen Transformators 7, im Leuchtengehäuse 2 oder beispielsweise auch im Gehäuse des elektronischen Vorschaltgerätes 9 angeordnet sein.

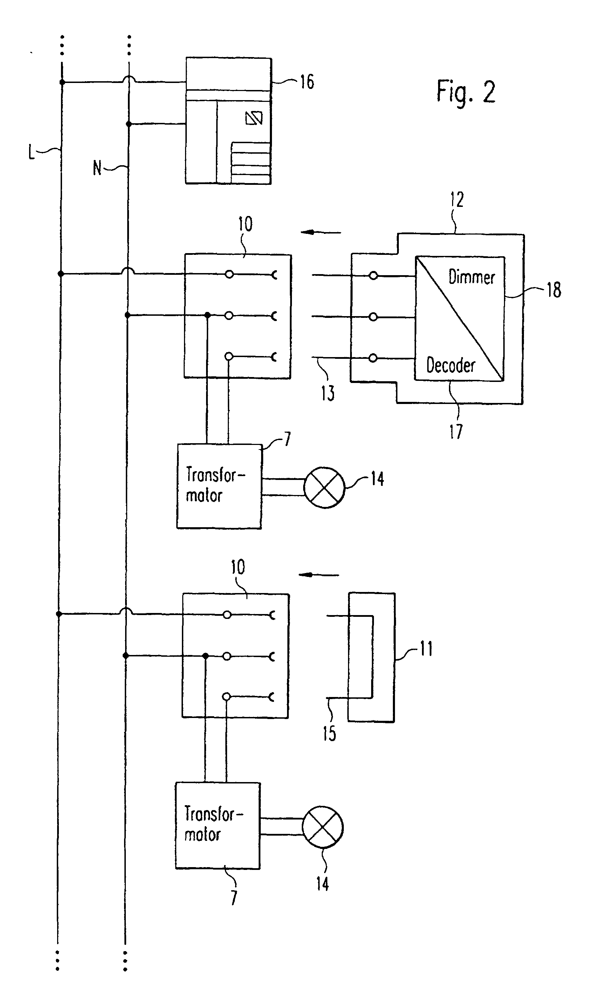

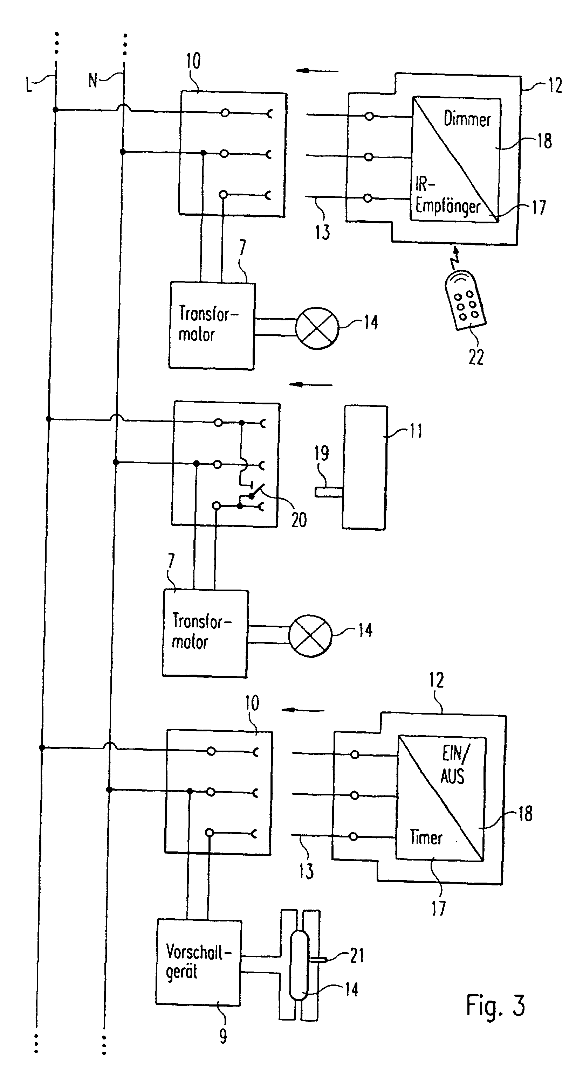

Der in Fig. 1 gezeigte Strahler 1 besitzt einen bestimmten Umfang an Basisfunktionen, wie z. B das Abgeben von Kunstlicht bestimmter Helligkeit. Erfindungsgemäß wird nunmehr vorgeschlagen, durch Kopplung des Ergänzungsmoduls 12 mit der Schnittstelle 10 diesen Basisfunktionsumfang des Strahlers 1 entsprechend dem jeweils gewählten Ergänzungsmodul 12 zu verändern, insbesondere zu erweitern. Durch Aufstecken des Ergänzungsmoduls 12 auf die Schnittstelle 10 des in Fig. 1 gezeigten Strahlers wird der Ergänzungsmodul 12 bzw. die auf ihm befindlichen Ergänzungsbaugruppen über die Schnittstelle 10 mit den Betriebsgeräten des Strahlers 1, insbesondere mit dem in Fig. 1 gezeigten elektronischen Vorschaltgerät 9 und/oder mit dem elektronischen Transformator 7 verbunden, so daß der Ergänzungsmodul 12 im gekoppelten Zustand mit der Schnittstelle 10 unmittelbar in die Steuerung des Strahlers 1 eingreifen kann. Dies soll nachfolgend näher anhand Fig. 2 und 3 erläutert werden.

Fig. 2 zeigt den Einsatz der vorliegenden Erfindung in einem Beleuchtungssystem, in dem bestimmte Steuerinformationen für verschiedene Leuchten über eine gemeinsame Busleitung durch Aufmodulation auf die Sinusschwingung der Versorgungsspannung an die einzelnen Leuchten übertragen werden. In Fig. 2 ist die gemeinsame Busleitung durch einen stromführenden Leiter L und einen Nulleiter N dargestellt, die beispielsweise in der in Fig. 1 gezeigten Stromschiene 3 ausgebildet sein können. An die Busleitung L, N ist ein Bediengerät 16 angeschlossen, mit dessen Hilfe die einzelnen Leuchten individuell angesteuert und demnach individuell geschaltet und/oder gedimmt werden können. Ebenso lassen sich über das Bediengerät 16 voreingestellte Betriebszustände oder Beleuchtungsszenen der einzelnen an die Busleitung L, N angeschlossenen Leuchten einstellen und abrufen.

Wie in Fig. 2 gezeigt ist, sind beispielsweise zwei Lichtquellen 14 unterschiedlicher Leuchten an die gemeinsame Busleitung L, N angeschlossen. Jede dieser Leuchten wird über einen elektronischen Transformator 7 angesteuert und ist über eine Schnittstelle mit der Busleitung L, N verbunden. Abhängig von bestimmten Steuerbefehlen eines Benutzers moduliert das Bediengerät 16 die entsprechenden Steuerinformationen auf die Versorgungsspannung der Busleitung L, N und führt somit die Steuerinformationen den beiden an die Busleitung L, N angeschlossenen Leuchten zu. Zur Decodierung bzw. Demodulierung dieser Steuerinformationen benötigt jede Leuchte eine entsprechende Decodier- und/oder Steuereinrichtung, die die über die modulierte Versorgungsspannung übertragenen Steuersignale des Bediengeräts 16 in entsprechende Aktionen, wie z.B. Dimmen der Leuchte, Ein- / Ausschalten der Leuchte usw., umsetzen kann. Erfindungsgemäß ist vorgesehen, daß jede Schnittstelle 10 mit einem Ergänzungsmodul 12 gekoppelt werden kann, wobei die Kopplung insbesondere durch eine mehrpolige Steckverbindung oder Steckvorrichtung erfolgt, d.h. jeder Ergänzungsmodul 12 besitzt eine entsprechend der Schnittstelle 10 ausgebildete Anzahl von Kontaktstiften 13, die in die Schnittstelle 10 eingesteckt werden. Bei dem in Fig. 2 gezeigten Ausführungsbeispiel handelt es sich bei dem Ergänzungsmodul 12 um einen Modul, der sowohl eine Decoder-Ergänzungsbaugruppe 17 als auch eine Dimmer-Ergänzungsbaugruppe 18 aufweist. Bei Kopplung des Ergänzungsmoduls 12 mit der Schnittstelle 10 werden diese beiden Ergänzungsbaugruppen 17, 18 zum einen über die Schnittstelle 10 und die zentrale Busleitung L, N mit Strom versorgt und greifen zum anderen in die Steuerung der entsprechenden Leuchte ein, d.h. nach Aufstecken des Ergänzungsmoduls 12 auf die Schnittstelle 10 kann die jeweilige Leuchte zusätzlich zu ihrer ursprünglichen Basisbetriebsfunktion gemäß der Dimmer-Ergänzungsbaugruppe 18 gedimmt sowie gemäß der Decoder-Ergänzungsbaugruppe 17, die die über die zentrale Busleitung L, N übertragenen Steuersignale des Bediengeräts 16 decodiert, gesteuert werden. Das heißt, während die Leuchte im ursprünglichen Zustand lediglich Licht in einer bestimmten Helligkeit abgeben kann, ist die Leuchte nach Aufstecken des Ergänzungsmoduls 12 zudem in der Lage, über die Decoder-Ergänzungsbaugruppe 17 mittels des Bediengeräts 16 zentral angesteuert und über die Dimmer-Ergänzungsbaugruppe 18 auf bestimmte Weise gedimmt zu werden.

Soll kein Ergänzungsmodul 12 auf die Schnittstelle 10 aufgesteckt werden, wird die bereits anhand Fig. 1 erläuterte Abdeckplatte 11, die eine integrierte Kontaktbahn 15 besitzt, auf die Schnittstelle 10 aufgesteckt, so daß in diesem Fall die Schnittstelle 10 mit Hilfe der Kontaktbahn 15 der Abdeckplatte 11 überbrückt und die entsprechende Lichtquelle 14 somit an die Versorgungsleitung L, N angeschlossen wird.

Anhand der beiden in Fig. 2 dargestellten Beispiele ist ersichtlich, daß die Schnittstelle 10 vorteilhafterweise derart ausgestaltet ist, daß die jeweilige Leuchte nur betrieben werden kann, wenn entweder ein Ergänzungsmodul 12 oder die Abdeckplatte 11 mit der Schnittstelle 10 gekoppelt ist, da ansonsten die Lichtquelle 14 der Leuchte nicht mit der zentralen Busleitung L, N verbunden wird. Wie bereits zuvor erwähnt worden ist, kann die Leuchte bei Kopplung mit einem Ergänzungsmodul 12 abhängig von dem jeweiligen Ergänzungsmodul 12 mit zusätzlichen Betriebsfunktionen betrieben werden, während bei Abdeckung der Schnittstelle 10 mit Hilfe der Abdeckplatte 11 die Leuchte lediglich gemäß ihren ursprünglichen Basisfunktionen bzw. ihrer ursprünglichen Basisfunktion betrieben werden kann. Bei dem in Fig. 2 gezeigten Ergänzungsmodul 12 handelt es sich um einen funktionserweiternden Ergänzungsmodul 12, d.h. nach Aufstecken des Ergänzungsmoduls 12 auf die Schnittstelle 10 wird der für die Steuerung der entsprechenden Leuchte zur Verfügung stehende Funktionsumfang erweitert. Alternativ kann jedoch auch vorgesehen sein, daß über den Ergänzungsmodul 12 lediglich die Basisfunktion der Leuchte näher spezifiziert, d.h. entsprechende Parameterwerte, wie z.B. die Lichthelligkeit usw., eingestellt werden.

Fig. 3 zeigt weitere Möglichkeiten des Einsatzes der erfindungsgemäßen Leuchte mit einem Beleuchtungssystem, wobei mehrere Leuchten mit entsprechenden Lichtquellen 14 im Verbund miteinander betrieben werden und an eine Busleitung L, N angeschlossen sind. Bei dem in Fig. 3 dargestellten Beispiel werden jedoch keine Steuerinformationen über die Versorgungsspannung den einzelnen Leuchten zugeführt, sondern die einzelnen Leuchten sind lediglich an die gemeinsame Busleitung L, N zur Stromversorgung angeschlossen.

Wie in Fig. 3 oben dargestellt ist, kann beispielsweise der mit der Schnittstelle 10 zu koppelnde Ergänzungsmodul neben einer bereits erwähnten Dimmer-Ergänzungsbaugruppe 18 auch eine IR-Empfängerbaugruppe 17 aufweisen, so daß die in Fig. 3 oben dargestellte Leuchte durch Aufstecken der Ergänzungsbaugruppe 12 auf ihre Schnittstelle 10 nachträglich ohne Aufwand für eine Infrarot-Fernsteuerung mit Hilfe eines entsprechenden IR-Senders 22 nachgerüstet werden kann.

Wie in Fig. 3 unten dargestellt ist, kann die Erfindung auch im Zusammenhang mit Langfeldleuchten verwendet werden, die ebenfalls über ihre Schnittstellen 10 mit entsprechenden Ergänzungsmoduten 12 gekoppelt werden können, so daß die Langfeldleuchten nachträglich mit einer zusätzlichen Timerfunktion 17 und einer Ein-/Ausschaltfunktion 18 ausgerüstet werden, um die Langfeldleuchte 14 nach Ablauf einer bestimmten Zeitspanne einzuschalten oder nach Ablauf einer bestimmten Betriebszeitspanne auszuschalten. Im Zusammenhang mit der in Fig. 3 unten dargestellten Langfeldleuchte 14 ist ein Heizkondensator 21 dargestellt, der üblicherweise zum Vorheizen der Elektroden der Langfeldleuchte 14 eingesetzt wird.

Neben den in Fig. 2 und 3 dargestellten Ausführungsbeispielen eines Ergänzungsmoduls 12 sind selbstverständlich zahlreiche Varianten der entsprechenden Ergänzungsfunktionen möglich. So ist beispielsweise auch der Einsatz einer Ergänzungsbaugruppe 17 bzw. 18 denkbar, mit deren Hilfe die entsprechenden Leuchten für eine tageslichtabhängige oder tageszeitabhängige Lichtregelung nachgerüstet werden kann.

Wie bereits anhand Fig. 2 erläutert worden ist, ist die Schnittstelle 10 der erfindungsgemäßen Leuchte vorteilhafterweise derart ausgestaltet, daß die Leuchte nur dann betrieben werden kann, wenn entweder ein Ergänzungsmodul 12 oder die Abdeckplatte 11 auf die Schnittstelle 10 aufgesteckt worden ist. Alternativ zu der in Fig. 2 gezeigten Ausgestaltung der Abdeckplatte 11 mit integrierter Kontaktbahn 15 kann, wie in Fig. 3 in der mittleren Darstellung gezeigt ist, mit der Schnittstelle 10 auch ein Schalter 20, insbesondere ein Mikroschalter, gekoppelt sein, der bei Aufstecken der Abdeckplatte 11 auf die Schnittstelle 10 durch einen entsprechend an der Abdeckplatte 11 ausgestalteten Vorsprung 19 geschlossen wird, so daß in diesem Fall die Schnittstelle 10 bei aufgesteckter Abdeckplatte 11 über den Schalter 20 überbrückt wird und ein Betrieb der entsprechenden Lichtquelle 14 möglich ist. Mit Abnehmen der Abdeckplatte 11 öffnet sich dabei der Schalter 20 automatisch, so daß ein Betrieb der Leuchte über die Schnittstelle 10 nur bei erneutem Aufstecken der Abdeckplatte 11 oder eines entsprechenden Ergänzungsmoduls 12 möglich ist.

Sowohl in Fig. 2 als auch in Fig. 3 wird bei Aufstecken der Abdeckplatte 11 die Schnittstelle 10 automatisch überbrückt, ohne daß dabei die ursprünglichen Basisfunktionen bzw. die ursprüngliche Basisfunktion der Leuchte beeinträchtigt wird, d.h. die entsprechende Leuchte kann gemäß ihrem ursprünglichen Basisfunktionsumfang uneingeschränkt betrieben werden.

## Patentansprüche

1. Leuchte (1),
mit einem Gehäuse (2),
mit einem in dem Gehäuse (2) angeordneten Lichtmittel (14), und
mit elektrischen Anschlußmitteln (4), um das Lichtmittel (14) mit einer elektrischen Versorgungsspannung (L, N) zu verbinden,
wobei der Leuchte (1) ein bestimmter Basisfunktionsumfang zugeordnet ist,
**gekennzeichnet durch** unmittelbar an oder in der leuchte angeordnete Schnittstellenmittel (10), mit denen ein Ergänzungsmodul (12) koppelbar ist, wobei der Ergänzungsmodul (12) mindestens eine Ergänzungsfunktion (17,18) besitzt,
**durch** die im gekoppelten Zustand der ursprüngliche Basisfunktionsumfang der Leuchte (1) verändert wird.

2. Leuchte (1),
**dadurch gekennzeichnet,**
**daß** der Basisfunktionsumfang der Leuchte (1) bei Kopplung der Schnittstellenmittel (10) mit einem Ergänzungsmodul (12) um die Ergänzungsfunktion (17,18) des Ergänzungsmoduls (12) erweitert wird.

3. Leuchte nach Anspruch 1 oder 2,
**dadurch gekennzeichnet,**
**daß** bei Kopplung der Schnittstellenmittel (10) mit einem Ergänzungsmodul (12) Parameter des ursprünglichen Basisfunktiongsumfangs des Leuchte (1) entsprechend der Ergänzungsfunktion (17,18) des Ergänzungsmoduls (12) näher spezifiziert und eingestellt werden.

4. Leuchte nach einem der vorhergehenden Ansprüche,
**dadurch gekennzeichnet,**
**daß** die Schnittstellenmittel (10) eine elektrische Anschlußeinheit umfassen, in welche entsprechend ausgebildete Kontaktelemente (13) eines Ergänzungsmoduls (12) einsteckbar sind.

5. Leuchte nach einem der vorhergehenden Ansprüche,
**gekennzeichnet durch**
Überbrückungsmittel (11), welche, falls keine Kopplung der Schnittstellenmittel (10) mit einem Ergänzungsmodul (12) beabsichtigt ist, mit der Leuchte (1) derart koppelbar sind, daß die Schnittstellenmittel (10) ohne Beeinträchtigung des Basisfunktionsumfangs der Leuchte (1) überbrückt werden.

6. Leuchte nach Anspruch 5,
**dadurch gekennzeichnet,**
**daß** die Überbrückungsmittel (11) im gekoppelten Zustand mit der Leuchte (1) die Schnittstellenmittel (10) abdecken.

7. Leuchte nach Anspruch 6,
**dadurch gekennzeichnet,**
**daß** die Überbrückungsmittel (11) plattenförmig sind.

8. Leuchte nach einem der Ansprüche 5 bis 7,
**dadurch gekennzeichnet,**
**daß** die Überbrückungsmittel (11) elektrische Verbindungsmittel (15) aufweisen, welche bei Kopplung der Überbrückungsmittel (11) mit der Leuchte (1) die Schnittstellenmittel (10) überbrücken.

9. Leuchte nach einem der Ansprüche 5 bis 7,
**dadurch gekennzeichnet,**
**daß** an die Schnittstellenmittel (10) ein elektrischer Schalter (20) angeschlossen ist, welcher im eingeschalteten Zustand die Schnittstellenmittel (10) überbrückt, und
**daß** der elektrische Schalter (20) bei nicht angekoppelten Überbrückungsmitteln (11) ausgeschaltet und bei angekoppelten Überbrückungsmitteln (11) eingeschaltet ist.

10. Leuchte nach Anspruch 9,
**dadurch gekennzeichnet,**
**daß** die Überbrückungsmittel (11) ein mechanisches Betätigungselement (19) aufweisen, durch welches der elektrische Schalter (20) bei Kopplung der Überbrückungsmittel (11) mit der Leuchte (1) eingeschaltet wird.

11. Leuchte nach einem der Ansprüche 5 bis 10,
**dadurch gekennzeichnet,**
**daß** die Leuchte (1) nur funktionsfähig ist, falls entweder ein Ergänzungsmodul (12) oder die Überbrückungsmittel (11) mit der Leuchte (1) gekoppelt sind.

12. Leuchte nach einem der vorhergehenden Ansprüche,
**dadurch gekennzeichnet,**
**daß** die Leuchte (1) ein über die elektrischen Anschlußmittel (4) an eine Stromschiene (3) anschließbarer Strahler ist, wobei sich die Schnittstellenmittel (10) im Bereich eines Kupplungsteils bzw. Adaptes des Strahlers befinden.

13. Leuchte nach einem der Ansprüche 1 bis 11,
**dadurch gekennzeichnet,**
**daß** die Schnittstellenmittel (10) in dem Gehäuse (2) der Leuchte (1) angeordnet sind.

14. Leuchte nach einem der Ansprüche 1 bis 11,
**dadurch gekennzeichnet,**
**daß** die Schnittstellenmittel (10) in dem Gehäuse eines elektrischen Betriebsgerätes (7,9) der Leuchte (1) angeordnet sind.

15. Ergänzungsmodul (12) für eine Leuchte (1) nach einem der vorhergehenden Ansprüche,
mit einer der mindestens einen Ergänzungsfunktion des Ergänzungsmoduls (12) entsprechenden elektrischen Baugruppe (17,18), und
mit Anschlußmitteln (13), welche mit den Schnittstellenmitteln (10) der Leuchte (1) koppelbar sind,
wobei die von der elektrischen Baugruppe (17,18) bereitgestellte Ergänzungsfunktion eine kabellose Fernsteuerungsfunktion und/oder eine Bewegungsmelderfunktion und/oder eine Rauchmelderfunktion und/oder eine Sprachfunktion und/oder eine Timerfunktion und/oder eine bestimmte Decodierfunktion zur Decodierung von an die Leuchte (1) über die Versorgungsspannung (L,N) übertragenen Steuersignalen und/oder eine tageszeit- oder tageslichtabhängige Helligkeitsregelungsfunktion ist.

16. Verwendung einer Leuchte (1) nach einem der Ansprüche 1 bis 14 in einem Beleuchtungssystem, in dem zentral Steuersignale durch Modulierung der Versorgungsspannung (L,N) an mehrere Leuchten (1,14) des Beleuchtungssystems angelegt werden, wobei die Leuchten (1,14), die derart übertragenen Steuersignale decodieren und in entsprechende Steueraktionen umsetzen.

## Claims

1. Luminaire (1),
having a housing (2),
having an illumination means (14) arranged in the housing (2), and
having electrical connection means (4) for connecting the illumination means (14) with an electric supply voltage (L, N),
there being associated with the luminaire (1) a certain range of basis functions,
**characterized by**
interface means (10), arranged directly at or in the luminaire, with which an expansion module (12) can be coupled, the expansion module (12) having at least one expansion function (17, 18), by which the original range of basis functions of the luminaire (1) is altered in the coupled condition (2).

2. Luminaire (1),
**characterized in that**,
the range of basis functions of the luminaire (1) is expanded by the expansion function (17, 18) of the expansion module (12) upon coupling of the interface means (10) with the expansion module (12).

3. Luminaire according to claim 1 to 2,
**characterized in that**,
upon coupling of the interface means (10) with an expansion module (12) parameters of the original range of basis functions of the luminaire (1) are specified in more detail and set in accordance with the expansion function (17, 18) of the expansion module (12).

4. Luminaire according to any preceding claim,
**characterized in that**,
the interface means (10) include an electrical connection unit into which correspondingly constituted contact elements (13) of an expansion module (12) can be inserted.

5. Luminaire according to any preceding claim,
**characterized by**
bridging means (11) which, in the event that a coupling of the interface means (10) with an expansion module (12) is intended, can be so coupled with the luminaire (1) that the interface means (10) are bridged over without affecting the range of basis functions of the luminaire (1).

6. Luminaire according to claim 5,
**characterized in that**,
in the condition coupled with the luminaire (1) the bridge means (11) cover over the interface means (10).

7. Luminaire according to claim 6,
**characterized in that**,
the bridge means (11) are plate- or board-like.

8. Luminaire according to any of claims 5 to 7,
**characterized in that**,
the bridging means (11) have electrical connection means (15) which, upon coupling of the bridging means (11) with the luminaire (1), bridge over the interface means (10).

9. Luminaire according to any of claims 5 to 7,
**characterized in that**,
an electrical switch (20) is connected to the interface means (10) which switch in the switched-on condition bridges over the interface means (10), and **in that** the electrical switch (20) is switched off when the bridging means (11) are not coupled on, and is switched on when the bridging means (11) are coupled on.

10. Luminaire according to claim 9,
**characterized in that**,
the bridging means (11) have a mechanical actuation element (19) by means of which the electrical switch (20) is switched on upon coupling of the bridging means (11) with the luminaire (1).

11. Luminaire according to any of claims 5 to 10,
**characterized in that**,
the luminaire (1) is only capable of functioning if either an expansion module (12) or the bridging means (11) are coupled with the luminaire (1).

12. Luminaire according to any preceding claims,
**characterized in that**,
the luminaire (1) is spot lamp which can be connected via the electrical connection means (4) to a current rail (3), the interface means (10) being located in the region of a coupling part or adapter of the spot lamp.

13. Luminaire according to any of claims 1 to 11,
**characterized in that**,
the interface means (10) are arranged in the housing (2) of the luminaire (1).

14. Luminaire according to any of claims 1 to 11,
**characterized in that**,
the interface means (10) are arranged in the housing of an electrical operating apparatus (7, 9) of the luminaire (1).

15. Expansion module (12) for a luminaire (1) in accordance with any preceding claim,
having an electrical component group (17, 18) corresponding to the at least one expansion function of the expansion module (12), and
having connection means (13), which can be coupled with the interface means (10) of the luminaire (1),
wherein the expansion function made available by the electronic component group (17, 18) is a wireless remote control function and/or a movement detector function and/or a smoke detector function and/or a speech function and/or a timer function and/or a certain decoding function for decoding control signals transferred to the luminaire (1) via the supply voltage (L, N) and/or a brightness regulation function dependent upon the time of day or daylight.

16. Use of a luminaire (1) according to any of claims 1 to 14 in an illumination system in which central control signals are applied to a plurality of luminaires (1, 14) of the illumination system by modulation of the supply voltage (L, N), wherein the luminaires (1, 14) decode the so transferred control signals and convert them to corresponding control actions.

## Revendications

1. Luminaire (1),
avec un logement (2),
avec un moyen d'éclairage (14) disposé dans le logement (2), et avec des moyens de raccordement (4) électriques, afin de relier le moyen d'éclairage (14) à une tension d'alimentation (L, N) électrique,
dans lequel au luminaire (1) est attribuée une certaine fonction de base,
**caractérisé en ce que** des moyens d'interface (10) disposés directement sur le luminaire ou dans le luminaire sont couplés, avec un module complémentaire (12) dans lequel le module complémentaire (12) possède au moins une fonction complémentaire (17, 18), **en ce que** la fonction de base initiale du luminaire (1) est modifiée dans l'état couplé.

2. Luminaire (1),
**caractérisé en ce que**
la fonction de base du luminaire (1) est élargie en cas de couplage des moyens d'interface (10) avec un module complémentaire (12) avec la fonction complémentaire (17, 18) du module complémentaire (12).

3. Luminaire selon la revendication 1 ou 2,
**caractérisé en ce que**
en cas de couplage des moyens d'interface (10) avec un module complémentaire (12), des paramètres de la fonction de base initiale du luminaire (1) sont spécifiés de façon plus précise et sont réglés selon la fonction complémentaire (17, 18) du module complémentaire (12).

4. Luminaire selon l'une quelconque des revendications précédentes,
**caractérisé en ce que**
les moyens d'interface (10) comprennent une unité de raccordement électrique,
dans laquelle des éléments de contact (13) de conception appropriée d'un module complémentaire (12) peuvent être emboîtés.

5. Luminaire selon l'une quelconque des revendications précédentes,
**caractérisé en ce que**
des moyens de pontage (11), qui, si aucun couplage des moyens d'interface (10) avec un module complémentaire (12) n'est envisagé, peuvent être couplés de telle sorte que les moyens d'interface (10) sont court-circuités sans porter préjudice à la fonction de base du luminaire (1).

6. Luminaire selon la revendication 5,
**caractérisé en ce que**
les moyens de pontage (11) recouvrent les moyens d'interface (10) dans l'état couplé avec le luminaire (1).

7. Luminaire selon la revendication 6,
**caractérisé en ce que**
les moyens de pontage (11) sont en forme de plaque.

8. Luminaire selon l'une quelconque des revendications 5 à 7,
**caractérisé en ce que**
les moyens de pontage (11) présentent des moyens de liaison électriques (15) qui court-circuitent les moyens d'interface (10) en cas de couplage des moyens de pontage (11) avec le luminaire (1).

9. Luminaire selon l'une quelconque des revendications 5 à 7,
**caractérisé en ce que**
aux moyens d'interface (10) est raccordé un interrupteur (20) électrique, qui court-circuite les moyens d'interface (10) dans l'état connecté et **en ce que** l'interruption (20) électrique est déconnecté avec des moyens de pontage (11) non couplés et est connecté avec des moyens de pontage (11) couplés.

10. Luminaire selon la revendication 9,
**caractérisé en ce que**
les moyens de pontage (11) présentent un élément de commande (19) mécanique, par lequel l'interrupteur (20) électrique est connecté en cas de couplage des moyens de pontage (11) avec le luminaire (1).

11. Luminaire selon l'une quelconque des revendications 5 à 10,
**caractérisé en ce que**
le luminaire (1) ne peut fonctionner que si soit un module complémentaire (12) soit les moyens de pontage (11) sont couplés avec le luminaire (1).

12. Luminaire selon l'une quelconque des revendications précédentes,
**caractérisé en ce que**
le luminaire (1) est une source de rayonnement pouvant être raccordée à un rail électrique (3) par les moyens de raccordement (4) électriques, les moyens d'interface (10) se trouvant dans la zone d'une pièce de couplage ou d'un adaptateur de la source de rayonnement.

13. Luminaire selon l'une quelconque des revendications 1 à 11,
**caractérisé en ce que**
les moyens d'interface (10) sont disposés dans le logement (2) du luminaire (1).

14. Luminaire selon l'une quelconque des revendications 1 à 11,
**caractérisé en ce que**
les moyens d'interface (10) sont disposés dans le logement d'un appareil de service (7, 9) électrique du luminaire (1).

15. Module complémentaire (12) pour un luminaire (1) selon l'une quelconque des revendications précédentes,
avec un ensemble (17, 18) électrique correspondant au moins à une fonction complémentaire du module complémentaire (12), et
avec des moyens de raccordement (13) qui peuvent être couplés avec les moyens d'interface (10) du luminaire (1),
la fonction complémentaire mise à disposition par l'ensemble (17, 18) électrique étant une fonction de télécommande sans câble et/ou une fonction de signalement de déplacement et/ou une fonction de signalement de fumée et/ou une fonction de parole et/ou une fonction de minuterie et/ou une fonction de décodage définie pour le décodage de signaux de commande transmis au luminaire (1) par la tension d'alimentation (L, N) et/ou une fonction de réglage de luminosité en fonction de l'heure du jour ou de la lumière du jour.

16. Utilisation d'un luminaire (1) selon l'une quelconque des revendications 1 à 14 dans un système d'éclairage, dans lequel des signaux de commande centraux sont appliqués par modulation de la tension d'alimentation (L, N) sur plusieurs luminaires (1, 14) du système d'éclairage, les luminaires (1, 14) décodant les signaux de commande transmis de cette façon et les convertissent en actions de commande appropriées.
